# EUROPÄISCHE PATENTANMELDUNG

(11) **EP 0 697 588 A2**
(43) Veröffentlichungstag der Anmeldung: **21.02.1996**
(21) Anmeldenummer: 95108846.7
(22) Anmeldetag: 08.06.1995
(51) Int. Cl.: G01M 7/00, G01L 5/00

(54) **Verfahren und Vorrichtung zum Analysieren des Körperschalls in festen Körpern**

(30) Priorität: 20.07.1994 DE 4425702
(71) Anmelder: MARCO SYSTEMANALYSE UND ENTWICKLUNG GmbH, D-85221 Dachau (DE)
(72) Erfinder: Reuter, Martin, D-85221 Dachau (DE)
(74) Vertreter: Schaumburg, Thoenes & Thurn

(57) **Zusammenfassung**

Bei einem Verfahren zum Analysieren von Körperschall in festen Körpern (10), insbesondere in Maschinenteilen, wird die Druckkomponente des Körperschallfeldes im Inneren des Maschinenteiles (10) gemessen und das Meßsignal ausgewertet. Vorzugsweise wird die Druckkomponente des Körperschallfeldes durch Verformung eines piezokeramischen Körpers (20) erfaßt, der kraftschlüssig in einem Hohlraum (12) des Maschinenteils (10) eingespannt wird.

## Beschreibung

Die Erfindung betrifft ein Verfahren zum Analysieren von Körperschall in festen Körpern, insbesondere in Maschinenteilen sowie eine Vorrichtung zur Durchführung dieses Verfahrens.

Vorrichtungen zur Schwingungsmessung an Maschinen werden häufig eingesetzt, um zum Beispiel mögliche Maschinenschäden (Lagergeräusche, Unwucht, usw.) früh erkennen zu können. Auch im Zusammenhang mit dem Bemühen um Schallschutz (Weiterleitung von Schall in festen Körpern, Übergang von Körperschall in Luftschall) sind solche Untersuchungen von Interesse.

Bei den meisten Maschinen wird der größte Geräuschanteil dadurch erzeugt, daß in der Struktur Körperschall angeregt und dann von den Oberflächen als Luftschall abgegeben wird.

Üblich ist es, an der zu untersuchenden Maschine Schwingungsaufnehmer anzubringen, die ein elektrisches Signal dadurch erzeugen, daß eine seismische Masse bei Beschleunigung auf ein piezoelektrisches Element wirkt. Ein solcher Sensor reagiert also empfindlich auf Beschleunigungen wie sie an der Oberfläche von schwingenden Maschinenteilen auftreten.

Die so gemessenen Schwingungen liefern für viele Zwecke ausreichende Informationen. Die Zunahme von Maschinenvibrationen kann zum Beispiel ein Hinweis auf ein unzulässig großes Lagerspiel sein. In vielen Fällen ist man aber nicht in erster Linie an solchen Maschineneigenschaften interessiert. Man kann nämlich die Schallerscheinungen auch dazu verwenden, äußere Krafteinwirkungen auf den Maschinenkörper oder Maschinenteile zu analysieren. In der Regel werden solche Einwirkungen die Maschine oder Teile derselben zu Schwingungen im hörbaren Frequenzbereich anregen. Sind diese Schwingungen vom Typ "Biegeschwingung", so sind sie stets auch an ein Feld von Druck- und Scherwellen im Inneren des Maschinenkörpers gekoppelt. Diese Erscheinung wird als Körperschall bezeichnet. Anwendungsfälle der vorstehend beschriebenen Art sind beispielsweise Versuche, mittels Schwingungsaufnehmern am Block eines Verbrennungsmotors auf den Verlauf der Verbrennungsvorgänge zu schließen (Klopfsensor), oder die Analyse der Geräusche an einer Tragewalze eines Förderbandes: Eigenschaften des Bandes, wie zum Beispiel der Verschleiß an Spleißstellen, können sich auf den Walzenkörper übertragen und äußern sich dann in charakteristischen Schallerscheinungen.

Das Körperschallfeld im Inneren eines festen Körpers besteht sowohl aus longitudinalen Kompressionswellen als auch aus Transversalwellen, die mit Schubkräften einhergehen. Die Kombination dieser Grundtypen der Körperschallwellen führt zu Biegewellen, die an der Oberfläche des Körpers die größten Bewegungen hervorrufen. Außen an einem Maschinenteil befestigte Aufnehmer erfassen diese aus dem inneren Schwingungsfeld resultierende Wirkung.

Im Schwingungsaufnehmer vom Typ des oben genannten Beschleunigungssensors bildet die seismische Masse mit ihrer Abstützung auf dem piezoelektrischen Element eine schwingungsfähige Anordnung, die eine bestimmte Eigenfrequenz besitzt. Je empfindlicher der Aufnehmer sein soll, desto schwerer muß die die Kraftwirkung ausübende Masse sein. Damit sinkt aber die Eigenfrequenz, die in der Regel den Bereich der erfaßbaren Frequenzen nach oben begrenzt. So ist für Aufnehmer mit großem Frequenzbereich eine sehr hohe Verstärkung erforderlich, was zu Problemen mit dem Rauschuntergrund und Störeinstreuungen führen kann.

Die vom eigentlichen Körperschall erregten Oberflächenschwingungen haben an schweren Maschinen nur sehr kleine Amplituden. Sie werden zumeist von niederfrequenten Ganzkörpervibrationen mit viel größerer Amplitude überlagert, so daß in der Auswerteeinrichtung häufig eine Signalfilterung erforderlich ist.

Anstatt mittels an der Maschine befestigter Schwingungsaufnehmer kann man auch versuchen, den von schwingenden Maschinenoberflächen induzierten Luftschall mit normalen Mikrophonen aufzunehmen. Damit kann es möglich sein, auch aus diesen Signalen die gewünschte Information zu gewinnen. Da das Feld des Luftschalles aber von den unterschiedlichsten Geräuschquellen angeregt wird, ist in einer lauten Umgebung das Herausfiltern des von einer bestimmten Quelle herrührenden Schalls schwierig.

Der Erfindung liegt die Aufgabe zugrunde, ein Verfahren der eingangs genannten Art anzugeben, das einfach auszuführen ist und mit vergleichsweise geringem apparativem Aufwand ein möglichst störungsarmes Meßsignal liefert.

Diese Aufgabe wird durch die im kennzeichnenden Teil des Anspruchs 1 angegebenen Merkmale gelöst.

Bei dem erfindungsgemäßen Meßverfahren stellen weder äußere Geräusche (Luftschall) noch Schwingungen des festen Körpers insgesamt wesentliche Störfaktoren dar. Die Druckkomponente des Körperschallfeldes läßt sich innerhalb des Maschinenteiles direkt in ein Meßsignal umwandeln. Dadurch erhält man ohne wesentlichen Verstärkeraufwand ein gutes Signalrauschverhältnis. Da im wesentlichen nur die Druckkomponente des Körperschallfeldes erfaßt wird, erhält man ein Signal, dessen Zuordnung zum Körperschall eindeutig ist, sodaß Korrelationen zu bestimmten Anregungszuständen des festen Körpers oder Maschinenteiles einfacher als bei den oben erwähnten Verfahren ermittelt werden können.

Die Auswertung des Meßsignales kann beispielsweise bezüglich der Frequenz und/oder des Frequenzspektrums und/oder bezüglich der Amplitude der Druckkomponente des Schallfeldes erfolgen.

Eine direkte Wandlung der Druckkomponente des Schallfeldes in ein Meßsignal kann auf einfache Weise durch die Verformung eines piezokeramischen Körpers erfolgen, der kraftschlüssig in einem Hohlraum des Maschinenteiles eingespannt wird. Der Umweg über die Beschleunigung einer seismischen Masse entfällt bei dieser Lösung, so daß Störgrößen, welche beispielsweise auf die seismische Masse herkömmlicher Schwingungsaufnehmer einwirken, bei dem erfindungsgemäßen Verfahren keinen Einfluß haben.

Die Erfindung betrifft ferner eine Vorrichtung zum Analysieren des Körperschalles in festen Körpern, insbesondere Maschinenteilen mit mindestens einem Sensor und einer Auswerteeinheit, insbesondere zur Durchführung des oben beschriebenen Verfahrens. Erfindungsgemäß umfaßt dabei der Sensor einen piezokeramischen Körper, der elektrisch isoliert und spielfrei in einer Halterungseinrichtung fixiert, z.B. vergossen oder eingespannt ist, die ihrerseits in einem Hohlraum des festen Körpers fixierbar, z.B. mit Hilfe von Spannmitteln einspannbar ist. Auf diese Weise können die Druckänderungen in dem Körper direkt erfaßt und in elektrische Signale umgewandelt werden. Erforderlich hierzu ist, daß die Halterungseinrichtung zusammen mit dem piezokeramischen Körper in einer Bohrung oder einer vergleichbaren Aussparung in dem Maschinenteil durch Vergießen fixiert oder, wenn der Sensor zerstörungsfrei demontierbar sein soll, eingespannt werden kann.

Vorzugsweise umfaßt die Halterungseinrichtung hierzu einen Grundkörper mit einer Aussparung zur Aufnahme des piezokeramischen Körpers und einer dem Grundkörper zugeordneten äußeren ersten Keilfläche, eine den Grundkörper mindestens teilweise umschließende erste Spannhülse mit einer zur ersten Keilfläche komplementären inneren zweiten Keilfläche und mindestens ein Spannelement, um den Grundkörper und die Spannhülse parallel zur Steigungsrichtung der Keilflächen gegeneinander zu verstellen. Dies bietet die Möglichkeit, die Halterungseinrichtung ohne weitere Hilfsmittel an dem Maschinenteil selbst in der Aufnahmebohrung für die Halterungseinrichtung einzuspannen. Die erste Keilfläche kann direkt an dem Grundkörper oder auch an einer den Grundkörper aufnehmenden zweiten Spannhülse ausgebildet sein. Die Spannelemente sind zweckmäßigerweise Schrauben, die an den beiden Spannhülsen bzw. dem Grundkörper und der ersten Spannhülse angreifen und eine Verstellung der mit den Keilflächen versehenen Teile relativ zueinander ermöglichen.

Vorteilhafte Ausführungsformen der Erfindung sind in den Unteransprüchen angegeben.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Fig. 1: eine schematische Darstellung der erfindungsgemäßen Vorrichtung zum Analysieren des Körperschalls in Maschinenteilen mit einem Schnitt durch einen in einem Maschinenteil eingebauten Sensor gemäß einer ersten Ausführungsform der Erfindung,
- Fig. 2: eine Endansicht des Sensors in Richtung des Pfeiles A in Fig. 1,
- Fig. 3: einen die Achse enthaltenden Schnitt durch einen Grundkörper des Sensors,
- Fig. 4: eine Endansicht des Grundkörpers in Richtung des Pfeiles B in Fig. 3,

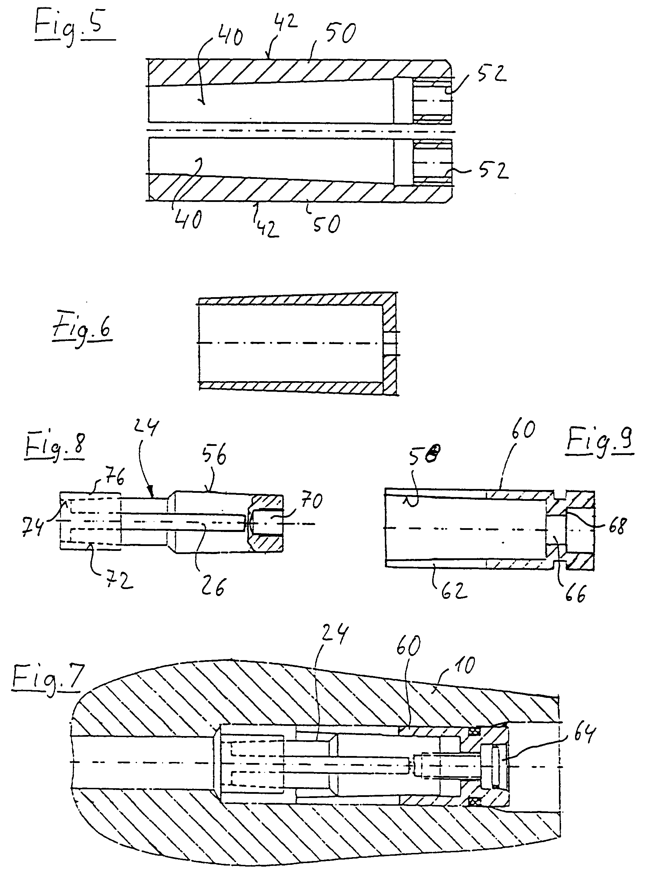

- Fig. 5: einen die Achse enthaltenden Schnitt durch eine äußere Spannhülse der Halterungseinrichtung,
- Fig. 6: einen die Achse enthaltenden Schnitt durch eine innere Spannhülse der Halterungseinrichtung,
- Fig. 7: eine der Fig. 1 entsprechende Darstellung eines Sensors gemäß einer zweiten Ausführungsform der Erfindung,
- Fig. 8: eine teilweise geschnittene Seitenansicht des Grundkörpers des Sensors gemäß der zweiten Ausführungsform der Erfindung und
- Fig. 9: eine Spannhülse des Sensors gemäß der zweiten Ausführungsform der Erfindung.

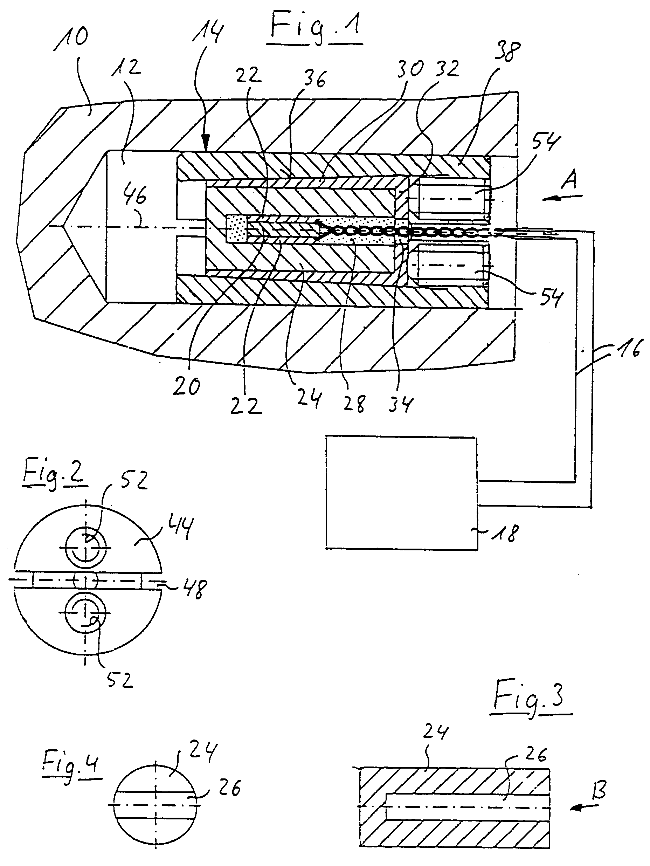

In Fig. 1 wird mit 10 ein fester Körper, beispielsweise ein Maschinenteil bezeichnet, das eine Bohrung 12 enthält, in die ein allgemein mit 14 bezeichneter Sensor eingesetzt ist. Der Sensor erzeugt in noch zu beschreibender Weise ein elektrisches Signal und ist über Anschlußleitungen 16 mit einer Auswerteeinheit 18 verbunden.

Der eigentliche Sensor besteht aus einem piezokeramischen Scheibchen (20), das zwischen zwei als Isolierkörper wirkenden Glasplatten 22 eingeschlossen und in einen zylindrischen Grundkörper 24 eingesetzt ist. Die Anschlußleitungen sind dabei mit durch die Glasplatten 22 abgedeckten elektrisch leitfähigen Schichten auf dem piezokeramischen Scheibchen verbunden. Um das zu ermöglichen, sind in den Glasplatten (22) z.B. kleine Kerben für die Anschlußleitungen 16 vorgesehen oder die leitfähigen Schichten über den Rand des piezokeramischen Scheibchens gezogen. Der zylindrische Grundkörper hat einen achsparallelen, den Grundkörper 24 diametral durchsetzenden Spalt 26, dessen Breite so bemessen ist, daß er gerade der Höhe des aus dem piezokeramischen Körper 20 und den Glasplatten 22 gebildeten Paketes ist, wie dies Fig. 1 zeigt. Das aus dem piezokeramischen Körper 20 und den Glasplatten 22 bestehende Paket ist mittels einer Vergußmasse 28, beispielsweise Epoxidharz, in dem Spalt 26 des Grundkörpers 24 vergossen. Wenn die Möglichkeit zur zerstörungsfreien Demontage des Grundkörpers 24 mit dem Sensor 20, 22 nicht erforderlich ist, genügt es, den Grundkörper in der Bohrung 12 zu vergießen.

Die in Figur 1 dargestellte bevorzugte Ausführungsform ermöglicht aber eine Demontage.

Hierzu ist der Grundkörper 24 in die zylindrische Bohrung einer inneren Spannhülse 30 eingesetzt, die an ihrem einen Ende durch eine Stirnwand 32 verschlossen ist. Diese Stirnwand 32 hat eine zentrale Öffnung 34, durch welche die Anschlußleitungen 16 für den piezokeramischen Körper 20 hindurchgeführt sind, wie dies Fig. 1 zeigt. Die Außenfläche der inneren Spannhülse 30 ist als Konusfläche 36 ausgebildet, deren Durchmesser zu dem der Stirnwand 32 fernen Ende der Spannhülse 30 hin abnimmt.

Die innere Spannhülse 30 ist in eine äußere Spannhülse 38 eingesetzt, deren Innenumfangsfläche 40 ebenfalls als Konusfläche mit gleichem Konuswinkel wie die Konusfläche 36 der inneren Spannhülse 30 ausgebildet ist. Die äußere Mantelfläche 42 der äußeren Spannhülse 38 ist zylindrisch und im wesentlichen dem Innendurchmesser der Bohrung 12 angepaßt.

Die äußere Spannhülse 38 hat ebenfalls an ihrem einen Ende eine Stirnwand 44 und ist durch einen die Achse 46 der Sensoranordnung 14 enthaltenden, die Spannhülse 38 diametral durchsetzenden Spalt 48 in zwei gleiche Hälften 50 unterteilt. In der Stirnwand 44 jeder Hälfte ist eine achsparallele Gewindebohrung 52 ausgebildet, in welche im eingebauten Zustand der Sensoranordnung (Fig. 1) jeweils eine Madenschraube 54 eingeschraubt ist.

Wie man der Darstellung in Fig. 1 entnehmen kann, läßt sich die Sensoranordnung 14 in der Bohrung 12 des Körpers 10 dadurch festklemmen, daß die Madenschrauben 54 eingeschraubt werden, wobei sie sich an der Stirnwand 32 der inneren Spannhülse 30 abstützen und letztere zusammen mit dem Grundkörper 24 in Fig. 1 nach links schieben. Dadurch werden die innere Spannhülse 30 und die äußere Spannhülse 38 jeweils in Richtung des zunehmenden Konusdurchmessers relativ zueinander verstellt, wodurch die Hälften 50 der äußeren Spannhülse 38 auseinandergedrückt und gegen die Innenwand der Bohrung 12 gepreßt werden. Damit erreicht man nicht nur die Fixierung der Sensoranordnung 14 in der Bohrung 12, sondern vor allem einen vollkommen spielfreien Kontakt zwischen der Bohrungswand 12 und dem piezokeramischen Körper 20 über die beiden Spannhülsen 38, 30, den Grundkörper 24 und die Isolierplatten 22. Damit kann auf einfache Weise eine einwandfreier Ankopplung des piezokeramischen Körpers 20 an den festen Körper 10 erfolgen, um Druckänderungen, die sich innerhalb des festen Körpers 10 fortpflanzen, unmittelbar durch den piezokeramischen Körper 20 in elektrische Signale zu wandeln. Wie man erkennt, kann die Sensoranordnung 14 um die Achse 46 in beliebiger Ausrichtung eingespannt und immer wieder neu orientiert werden. Das Lockern und Herausnehmen der Sensoranordnung 14 erfolgt dabei in der Weise, daß man zunächst die Madenschrauben 54 herausdreht und durch einen leichten Schlag auf die Stirnwand 44 der äußeren Spannhülse 38 die Klemmung zwischen dieser und der inneren Spannhülse 30 beseitigt. Dann kann die gesamte Anordnung aus der Bohrung 12 herausgezogen werden.

Bei der in den Figuren 7 bis 9 dargestellten zweiten Ausführungsform der Erfindung sind gleiche Teile wieder mit gleichen Bezugszeichen versehen. Bei der dort beschriebenen Ausführungsform entfällt die innere Spannhülse. Stattdessen ist am Grundkörper 24 selbst eine Außenkonusfläche 56 ausgebildet, die mit einer Innenkonusfläche 58 einer im wesentlichen zylindrischen Spannhülse 60 zusammenwirkt. Diese ist auf einem Teil ihrer Länge durch einen die Achse enthaltenden diametralen Spalt 62 unterteilt, so daß zwei spreizfähige Abschnitte gebildet werden. Das Verklemmen der Sensoranordnung in der Bohrung 12 des festen Körpers 10 erfolgt dadurch, daß der Grundkörper 24 mittels einer Schraube 64, welche eine Bohrung 66 an einem Ende der Spannhülse 60 durchsetzt und sich mit ihrem Kopf an einer Schulter 68 an der Spannhülse 60 abstützt, in eine axiale Gewindebohrung 70 des Grundkörpers 24 eingreift und diese in die Spannhülse 60 hineinzieht. Durch die Wahl der Konusflächen 56 und 58 werden dabei die durch den Spalt 62 voneinander getrennten Abschnitte der Spannhülse 60 gespreizt und gegen die Wand der Bohrung 12 des Festkörpers 10 gepreßt. Gleichzeitig werden die beiden Hälften des Grundkörpers 24, die durch den Spalt 26 voneinander getrennt sind, zusammengepreßt, so daß sie den piezokeramischen Sensor mit seinen Isolierplatten fest einschließen. Um das Aufbiegen der Abschnitte des Grundkörpers 24 zu verhindern, kann auf die mit einer leicht konischen Außenfläche 72 versehenen freien Enden der beiden Abschnitte des Grundkörpers 24 eine mit einer komplementären Innenkonusfläche 74 versehene Klemmhülse 76 aufgeschoben werden, wie diese in den Figuren 7 und 8 zu sehen ist.

Die vorstehend beschriebenen Ausführungsbeispiele zeigen, daß die einzige Voraussetzung für die Montage des erfindungsgemäßen Sensors eine kleine Bohrung in dem zu analysierenden Maschinenteil ist. In dieser Bohrung kann der erfindungsgemäße Sensor so montiert werden, daß der als Wandler dienende piezokeramische Körper spielfrei an das zu untersuchende Maschinenteil angekoppelt ist. Die Montage und Demontage des Sensors ist äußerst einfach.

## Patentansprüche

1. Verfahren zum Analysieren von Körperschall in festen Körpern (10), insbesondere in Maschinenteilen, dadurch **gekennzeichnet**, daß die Druckkomponente des Körperschallfeldes im Inneren des Maschinenteiles (10) gemessen und das Meßsignal ausgewertet wird.

2. Verfahren nach Anspruch 1, dadurch **gekennzeichnet**, daß das Meßsignal bezüglich der Frequenz und/oder des Frequenzspektrums und/oder der Amplitude der Druckkomponente des Körperschallfeldes ausgewertet wird.

3. Verfahren nach Anspruch 1 oder 2, dadurch **gekennzeichnet**, daß die Druckkomponente des Körperschallfeldes durch Verformung eines piezokeramischen Körpers (20) erfaßt wird, der kraftschlüssig in einem Hohlraum (12) des Maschinenteiles (10) eingespannt wird.

4. Vorrichtung zum Analysieren des Körperschalles in festen Körpern, insbesondere Maschinenteilen mit mindestens einem Sensor (14) und einer Auswerteeinrichtung (18), dadurch **gekennzeichnet**, daß der Sensor (14) einen piezokeramischen Körper (20) umfaßt, der elektrisch isoliert und spielfrei in einer Halterungseinrichtung (24, 30, 38) fixiert ist, die ihrerseits in einem Hohlraum (12) des festen Körpers (10) fixierbar ist.

5. Vorrichtung nach Anspruch 4, dadurch **gekennzeichnet**, daß der Sensor (14) in der Halterungseinrichtung (24, 30, 38) eingespannt ist und daß diese ihrerseits mit Hilfe von Spannmitteln (54) in dem Hohlraum (12) einspannbar ist.

6. Vorrichtung nach Anspruch 4 oder 5, dadurch **gekennzeichnet**, daß die Halterungseinrichtung einen Grundkörper (24) mit einer Aussparung (26) zur Aufnahme des piezokeramischen Körpers (20) hat.

7. Vorrichtung nach Anspruch 6, dadurch **gekennzeichnet**, daß die Halterungseinrichtung eine dem Grundkörper zugeordnete äußere erste Keilfläche (36; 56), eine den Grundkörper (24) mindestens teilweise umschließende erste Spannhülse (38) mit einer zur ersten Keilfläche (36; 56) komplementären inneren zweiten Keilfläche (40; 58) und mindestens ein Spannelement (54) umfaßt, um den Grundkörper (24) und die Spannhülse (38; 60) parallel zur Steigungsrichtung der Keilflächen (36, 40; 56, 58) gegeneinander zu verstellen.

8. Vorrichtung nach Anspruch 7, dadurch **gekennzeichnet**, daß die erste Keilfläche (56) an dem Grundkörper (24) ausgebildet ist.

9. Vorrichtung nach Anspruch 7, dadurch **gekennzeichnet**, daß die erste Keilfläche (36) an einer den Grundkörper (24) aufnehmenden zweiten Spannhülse (30) ausgebildet ist.

10. Vorrichtung nach einem der Ansprüche 6 bis 9, dadurch **gekennzeichnet**. daß der Grundkörper (24) und die Spannhülsen (30, 38; 60) als zueinander koaxiale Rotationskörper, und die Keilflächen als Konusflächen ausgebildet sind.

11. Vorrichtung nach einem der Ansprüche 7 bis 11, dadurch **gekennzeichnet**, daß das Spannelement eine Schraube (54) ist, die in eine achsparallele Gewindebohrung (52) der ersten Spannhülse (38) eingeschraubt ist und an dem Grundkörper (24) oder der zweiten Spannhülse (30) angreift.

12. Vorrichtung nach Anspruch 11, dadurch **gekennzeichnet**, daß die innere Spannhülse (30) an einem ihrer Enden durch eine Stirnwand (32) geschlossen ist und eine konische Außenfläche (36) mit zu dem offenen Spannhülsenende hin abnehmendem Durchmesser hat, daß die äußere Spannhülse (38) entlang der Hülsenachse in zwei Hälften (50) unterteilt ist, und daß die Spannelemente Druckschrauben (54) sind, die jeweils in eine achsparallele Bohrung (52) in jeder der äußeren Spannhülsenhälften (50) eingeschraubt sind und sich an der Stirnwand (32) der inneren Spannhülse (30) abstützen.

13. Vorrichtung nach einem der Ansprüche 7 bis 11, dadurch **gekennzeichnet**, daß das Spannelement eine Zugschraube (64) ist, die eine achsparallele Bohrung (66) in der äußeren Spannhülse (60) durchsetzt und in eine achsparallele Gewindebohrung (70) in dem Grundkörper (24) oder der inneren Spannhülse eingreift.

14. Vorrichtung nach einem der Ansprüche 6 bis 13, dadurch **gekennzeichnet**, daß die Aussparung im Grundkörper (24) von einem diesen auf einem Teil seiner Länge teilenden Spalt (26) gebildet ist.

15. Vorrichtung nach einem der Ansprüche 6 bis 14, dadurch **gekennzeichnet**, daß der piezokeramische Körper (20) in der Aussparung (26) des Grundkörpers (24) mittels einer Vergußmasse (28) fixiert ist.

16. Vorrichtung nach einem der Ansprüche 6 bis 15, dadurch **gekennzeichnet**, daß der piezokeramische Körper (20) mittels zweier Glasscheiben (22) gegenüber dem Grundkörper (24) elektrisch isoliert ist.
